# EUROPEAN PATENT APPLICATION

(11) **EP 4 152 117 A1**
(43) Date of publication of application: **22.03.2023**
(21) Application number: 21197173.4
(22) Date of filing: 16.09.2021
(51) Int. Cl.: G05D 1/06, B64D 45/04, B64F 1/00, G01S 17/933, G08G 5/00

(54) **LOCALIZATION METHOD AND DEVICE FOR AN AUTOMATED OR AUTONOMOUS AIRCRAFT**

(71) Applicant: Lilium eAircraft GmbH, 82234 Wessling (DE)
(72) Inventor: SAYRE-MCCORD, Thomas, 80335 Munich (DE); REUTER, Mirko, 85221 Dachau (DE); MARTIN, Eduardo, 82327 Tutzing (DE)
(74) Representative: Feller, Frank

(57) **Abstract**

A localization method for an automated or autonomous aircraft (100) comprises the following steps: acquiring images of an observation area (110) in front of and or below the aircraft (100) while the aircraft (100) is approaching a given destination (150) resulting in a time series of images, wherein a plurality of beacons (120) are arranged in the observation area (110) in a predetermined known spatial relationship to each other and to the destination (150), each beacon (120) intermittently emitting light in a predetermined known blinking pattern (160); recognizing and tracking light source objects throughout the time series; determining beacon objects from among the recognized and tracked light source objects based on the known blinking patterns of the beacons (120); and determining a state of the aircraft (100) with respect to the destination (150) based on the beacon objects thus determined.

## Description

The present invention relates to a localization method and a localization device for an automated or autonomous aircraft, in particular in an urban air mobility (UAM) setting.

Here, in an automated aircraft, the pilot is assisted to varying degrees by the localization device and other devices, whereas an autonomous aircraft is configured to operate without a pilot on board.

One of the promising approaches for autonomous or automated localization of such an aircraft is using cameras sensing in the visual or non-visual spectrum to identify a landing zone and localize the aircraft with respect to this landing zone. Providing uniquely and robustly detectable points on the landing zone to use for localization is however a major challenge in this promise.

There is currently no solution for autonomous or automated localization of an aircraft for landing in a UAM setting. However, there are technical solutions in similar fields, such as the instrument landing system (ILS), the microwave landing system (MLS) or the ground based augmentation system (GBAS) in commercial aerospace or visual simultaneous localization and mapping (SLAM) techniques in the area of unmanned aerial vehicles (UAV)
For UAV applications, it is furthermore known to use radio beacons.

The systems used in commercial aerospace such as ILS, MLS or GBAS are usually too large and expensive to be used in an urban air mobility setting, radio beacons require infrastructure, and SLAM techniques are not sufficiently robust as they rely on simultaneously making a map of the world while in flight.

Against this background, the objective problem of the invention is to provide a robust and simple technique for safely localizing an aircraft to perform automated or autonomous functions.

In order to achieve this, the invention proposes a localization method with the features of the independent method claim 1 and a localization device with the features of independent device claim 10.

According to a first aspect of the invention, the localization method comprises the following steps:
A) acquiring images of an observation area in front of and/or below the aircraft, preferably in regular time intervals, by means of an on-board camera unit while the aircraft is approaching a given destination located in the observation area, resulting in a time series of images, wherein a plurality of beacons are arranged in the observation area in a predetermined known spatial relationship to each other and to the destination, each beacon intermittently emitting light in a predetermined known blinking pattern;
B) recognizing and tracking light source objects throughout the time series of images;
C) determining beacon objects from among the recognized and tracked light source objects based on the known blinking patterns of the beacons; and
D) determining a state of the aircraft based on those light source objects determined as the beacon objects and based on the known spatial relationship of the beacons to each other and to the destination, the state of the aircraft comprising at least one of a position, a velocity, and an orientation of the aircraft with respect to the destination. Preferably, the state of the aircraft comprises a subset or all of these three characteristics.

The term "light source object" refers to that portion of a given image that is determined to correspond to a light source and/or to data comprising information about that portion, in particular the position and/or size and/or form of that portion in the given image.

Thus, the present invention uses "digitally coded lights" i.e. lights that are coded to blink or flash (ON/OFF) in a known pattern as a way to robustly differentiate beacons provided for guiding the aircraft to the destination from other elements of the camera data.

By detecting and identifying digitally coded lights with known locations in step C, these locations can be fed in step D into a localization algorithm such as an extended Kalman Filter to determine e.g. the current position of the aircraft with respect to the destination.

The aircraft positions etc. determined in this manner can then be used to control the flight trajectory of the aircraft and in particular to guide the aircraft to the destination.

In order to determine whether a recognized light source object corresponds to one of the beacons, a blinking pattern of the tracked light source object can be determined from the time series of images or from a time series of the corresponding light source object extracted from the time series of images and the determined blinking pattern can be compared to the known blinking patterns of the beacons.

In order to allow for a reliable detection of the beacons, the time series of images or of light source objects preferably covers a time period that is e.g. at least two times longer than the longest blinking pattern period of the beacons, e.g. the time series consists of or is extracted from the last n images, n being a natural number chosen in such a manner that the covered time period is long enough.

In particular, the beacons can be configured to emit light in the visual or infrared range (380nm-780nm or 780nm-1mm), in particular in the long wavelength infrared range (LWIR) with wavelengths from about 8 µm to about 15 µm or in the mid wavelength infrared range (MWIR) with wavelengths from about 3 µm to about 8 µm or the short wavelength infrared range (SWIR) with wavelengths from about 1 µm to about 3 µm. For increased robustness, multiple wavelengths can be used simultaneously. Of course the camera unit of the aircraft has to be sensitive to the wavelength range used by the beacons. If desired, the camera unit can comprise several camera devices which can be sensitive to the same wavelength range or to different wavelength ranges, depending on the ranges used by the beacons.

Furthermore, it is possible that characteristics of the blinking patterns such as light intensity and/or wavelength vary in a known manner depending on the weather and/or visibility conditions.

According to a specific embodiment of the invention, the destination is a landing pad and the method further comprises the following step:
E) generating commands for autonomously landing the aircraft or for assisting a pilot in landing the aircraft on the landing pad based on the determined state of the aircraft.

Data from other sources such as a satnav system and/or an inertial measurement unit and/or a radar altimeter provided on board the aircraft can be additionally taken into account for determining the current state of the aircraft, i.e. its current position, velocity and orientation and for guiding the aircraft to its destination.

Generally, it is possible to use beacons blinking with different blinking patterns in order to easily recognize particular regions or distinguish between different regions of the destination, for example different landing locations.

In order to detect the orientation of the destination with respect to the aircraft, e.g. when the destination is to be approached from a defined direction, the beacons should provide different blinking patterns to identify which light corresponds to which element of the landing zone. In particular, the plurality of beacons can comprise at least one first side beacon and at least one second side beacon arranged on opposed sides of the destination and emitting light in two different blinking patterns.

In order to easily define the outline of the destination in particular for human monitoring, the plurality of beacons can comprise a subgroup of outline beacons arranged along an outline of the destination, for example at the four corners of a rectangular landing pad.

It is also possible to provide a subgroup of approach path beacons arranged in a row marking an approach path to the destination, preferably either equally spaced or with spacing proportional to the distance to the landing zone. These approach path lights can provide closer reference points during long approach procedures.

The approach path beacons can have associated blinking patterns that are dependent on a distance of the respective beacon to the destination. For example, a blinking frequency could increase with decreasing distance to the destination.

Furthermore, it is possible to use a subgroup of stop beacons marking a border an aircraft landing on the destination should not cross, the stop beacons being configured to blink in an associated characteristic blinking pattern.

The images of the observation area can be acquired e.g. at a frequency of 30Hz to 60 Hz. Of course the blinking patterns of the beacons and the image acquiring frequency have to be compatible so that it is possible to recognize and track the images of the blinking beacons in the time series of images.

According to a second aspect of the invention, the localization device for the autonomous aircraft comprises a camera unit configured to acquire images of an observation area in front and/or below the aircraft, preferably in regular time intervals, a storage unit configured to store locations and blinking patterns of a plurality of beacons arranged in a predetermined spatial relationship to each other and to a given destination for the aircraft, e.g. a map of the geospatial locations and blinking pattern of all lights.

The device according to the invention furthermore comprises a processing unit comprising: a light detection and tracking unit configured to recognize and track light source objects throughout the time series of images, a pattern matching unit configured to determine whether each recognized light source object corresponds to one of the beacons based on the stored blinking patterns of the beacons, and a localization unit configured to determine the state (some or all of: position, orientation, velocity) of the aircraft with respect to the destination based on those recognized light source objects that have been determined to correspond to the beacons.

In short, the localization device can be configured to perform the localization method as described above or as defined in any of the method claims.

Preferably, the storage unit is also configured to store and regularly update the time series of images (e.g. the last n images) and/or a time series of the recognized and tracked light source objects as extracted therefrom. In order to save memory space, it is also possible only to store/update the time series of those light source objects determined to be beacon objects.

According to a specific embodiment, the localization device can furthermore comprise a flight control unit configured to control a flight trajectory of the aircraft based on the determined state thereof.

Furthermore, the localization device can comprise a communication unit configured to receive the locations and blinking patterns of the beacons from an external communication unit associated to the destination. The data concerning the beacons can e.g. be requested and subsequently received when the aircraft starts approaching a landing pad in order to fine tune the landing process.

Alternatively, a set of destinations and associated beacon data, i.e. locations and blinking patterns of the beacons, can be pre-stored in the storage unit.

Protection is also claimed for an automated or autonomous aircraft comprising a localization device as defined above.

The aircraft can be in particular a UAM aircraft, preferably a vertical take-off and landing (VTOL) aircraft for which it is especially important to determine the position of the aircraft with high accuracy in order to land it safely and in a controlled manner on a small landing pad with a constrained approach procedure.

In the following, the invention will be explained in more detail by way of several embodiments illustrated in the appended figures. Therein:
- Fig. 1a: is a simplified drawing of an aircraft approaching a destination in a top view in order to illustrate a localization method according to a first embodiment of the invention.
- Fig. 1b: is a side view of the subject matter of Fig. 1a.
- Fig. 2a: is a simplified drawing of an aircraft approaching a destination in a top view in order to illustrate a localization method according to a further embodiment of the invention.
- Fig. 2b: is a side view of the subject matter of Fig. 2a.
- Fig. 3: is a functional block diagram of a localization device according to an embodiment of the invention,
- Fig. 4: is a flowchart of a localization method according to an embodiment of the invention,
- Fig. 5: is a flowchart of an initialization process of a method according to an embodiment of the invention, and
- Fig. 6: is a flowchart of a main part of a localization method according to an embodiment of the invention.

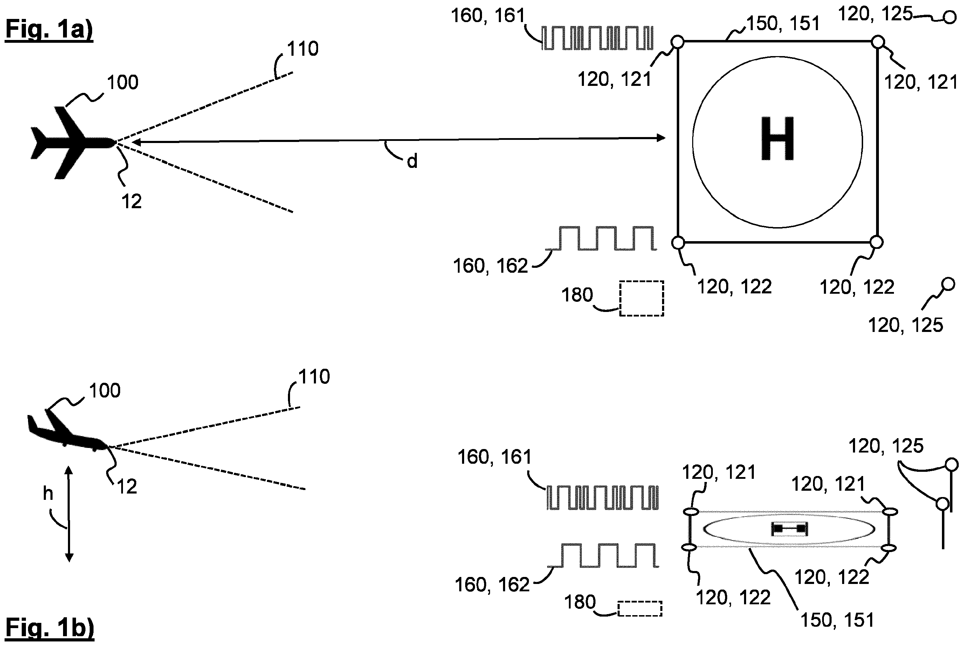

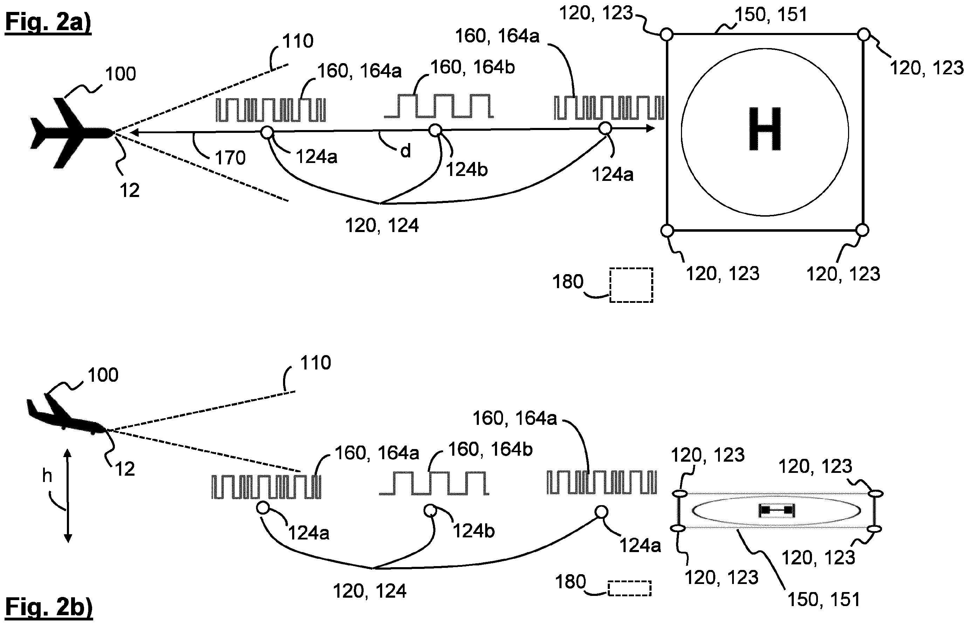

Figs. 1 and 2 each show an aircraft 100 approaching a given destination 150, here a usual rectangular landing pad 151.

Unless explicitly indicated otherwise, directions such as "in front of", "behind", "left", "right", "above" and "below" refer to directions as seen from the aircraft horizontally approaching the destination.

According to both embodiments, a camera unit 12 provided on board the aircraft 100 regularly acquires images of an observation area 110 indicated by dashed lines in the figures, wherein the camera unit 12 is oriented in such a manner that the destination 150 is disposed within the observation area 110.

A plurality of digitally coded beacons 120 are provided in a predetermined known relationship to each other and to the destination, each beacon 120 being configured to intermittently emit light, e.g. light in the visible or infrared range, preferably in the LWIR, MWIR, or SWIR range, in a predetermined known blinking pattern 160.

The beacons 120 can be constructed in such a manner that under good visibility conditions, the light emitted by the beacons 160 is visible by the camera unit 12 from a distance d of at least 1 km and from a height h of at least 60m. In particular, the intensity and/or the wavelength, possibly also the blinking pattern of the beacons can depend on the current weather and/or visibility conditions in order to improve the reliability of detection in different situations.

In both embodiments, an optional communication device 180 can be provided which is configured to send the locations of the beacons 120 with respect to the destination 150 and their associated blinking patterns to the aircraft 100 upon request.

The two embodiments shown in Fig. 1 and Fig. 2 mainly differ in the number and particular arrangement of the beacons 120 with respect to the destination 150.

In Figure 1, two first side beacons 121 and two second side beacons 122 provided on the left and right side of the landing pad 151 in Fig. 1 are configured to blink in different blinking patterns 161, 162 in order to allow the aircraft to detect the orientation of the landing pad 151.

Furthermore, two stop beacons 125 are provided behind the landing pad 151, also assisting in the localization of the aircraft.

In the second embodiment shown in Fig. 2, four outline beacons 123 from among the beacons 120 are provided at the four corners of the landing pad 151.

Furthermore, a row of approach path beacons 124 is provided in order to define an approach path 170 with shorter visual ranges guiding the aircraft 100 to the landing pad 150.

The approach path beacons 124 can be equidistantly spaced from each other and the blinking patterns of the approach path beacons 124 can alternate between two different predetermined blinking patterns 164a, 164b.

Alternatively, the blinking pattern of the approach path beacons 124 could indicate the distance of the respective beacon 124 to the destination 150, e.g. by increasing the frequency of the blinking pattern with decreasing distance.

In any case, by automatically recognizing and identifying the different beacons by means of their different blinking patterns and as the location of the beacons with respect to the destination 150 is known, the location, orientation, and velocity of the aircraft 100 with respect to the landing pad 151 (or a subset thereof) can be determined with high accuracy in order to safely guide the aircraft 100 to land on the landing pad 151.

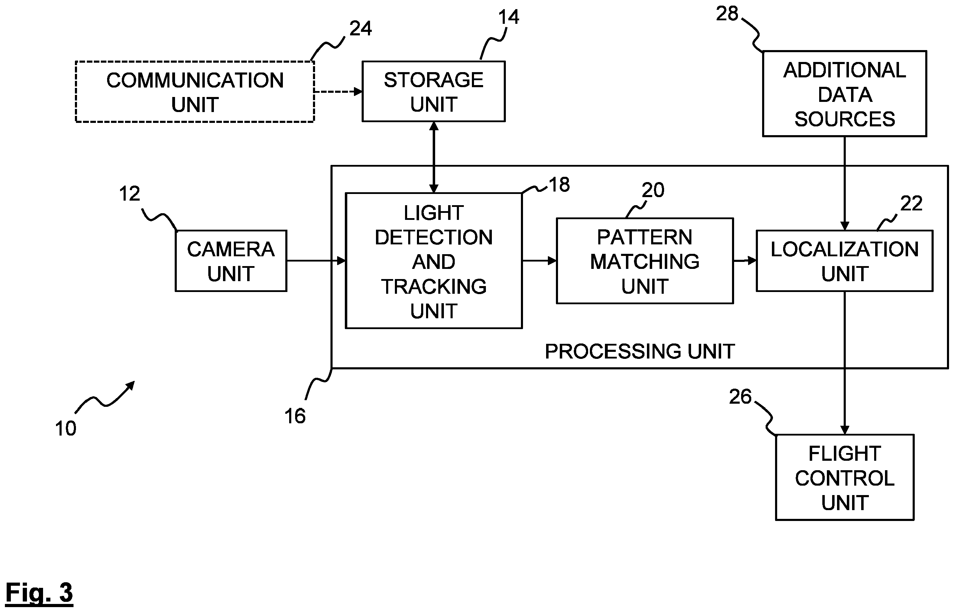

Fig. 3 is a block diagram of important components of a localization device 10 according to an embodiment of the invention, wherein a flow of data between the different components is indicated by arrows.

It is noted that Fig. 3 is mainly a functional and simplified description of the localization device and that the term "unit" does not necessarily imply that all components of a unit are located e.g. on the same component, chip or circuit board.

The localization device 10 comprises a camera unit 12 configured to regularly acquire images of the observation area 110 in front of and/or below the aircraft 100 while the aircraft 100 is approaching the destination 150, e.g. at a frequency of 30-60 Hz, resulting in a time series of images.

The localization device 10 furthermore comprises a storage unit 14 that is configured to store the locations and blinking patterns of the beacons 120 provided in order to guide the aircraft 100 to the destination 150.

The storage unit 14 can be connected to an optional communication unit 24 configured to request and receive the locations and blinking patterns of the beacons 120 associated to the destination 150 e.g. from the external communication device 180 shown in Figs. 1 and 2.

The images acquired by the camera unit 12 can be processed in the processing unit 16 comprising a light detection and tracking unit 18, a pattern matching unit 20 and a localization unit 22.

Generally, for light detection and tracking, individual light source objects are identified in a given image and associated with previous detections. It is noted that the tracking method has to be adapted to tracking blinking lights, i.e. when a light object image present in a previous image "vanishes" in a current image, it is only discarded if it does not reappear within a given time at the predicted position in the respective image. In scenarios where multiple detected lights may be the tracked light, Multi-Hypothesis tracking can be used in conjunction with the known flashing frequency to determine the correct track.

The time series of e.g. the last n images and/or a time series of the recognized and tracked light source objects as determined from the time series of images can optionally also be stored in the storage unit 14.

In the pattern matching unit 20, the time history of seeing a particular light source object in an image vs. not seeing it is compared with the stored blinking patterns in order to determine whether the particular light source object corresponds to one of the beacons and is thus a beacon object or whether it corresponds to an unrelated light source and can be discarded.

The beacon objects thus determined and/or the time series of the beacon objects are input into the localization unit 22 and combined with the known locations of the beacons 120 as well as (optionally) with data from additional data sources 28 such as a satnav system and/or an inertial measurement unit and/or a radar altimeter provided on board the aircraft, in order to determine e.g. the position, velocity and orientation of the aircraft with respect to the destination.

These data can be used in a flight control unit 26 to control a flight trajectory of the aircraft 100 e.g. in order to automatically land the aircraft 100 on an landing pad 151. The flight control unit 26 can be provided as part of the localization device or separately therefrom.

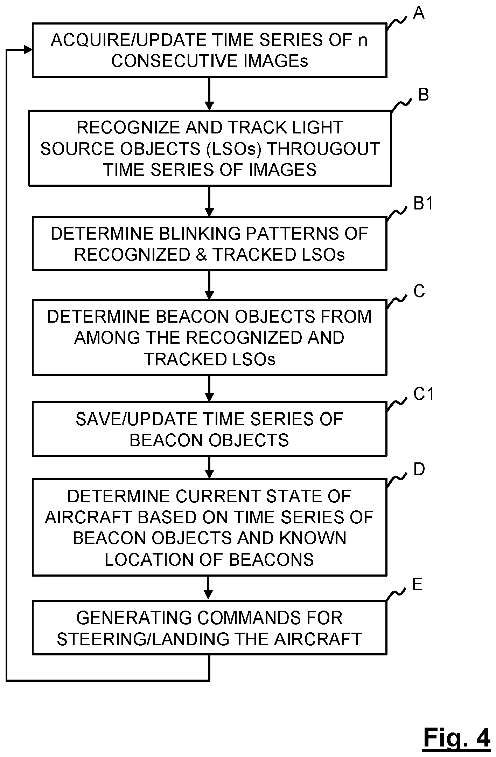

Finally, embodiments of a localization method according to the invention are described in more detail with reference to Figures 4 to 6.

Figure 4 is a flowchart providing a high-level overview of an embodiment of the method according to the invention.

It is noted that the sequence in which the different method steps are presented does not exclude the steps from at least partially overlapping.

In a method step A, a time series of e.g. n consecutive images of the observation area is acquired and this time series can be regularly updated throughout the method.

The time series length n is a natural number chosen in such a manner that it is possible to determine whether a blinking pattern of a light source object as detected and tracked through n consecutive images corresponds to one of the known blinking patterns of a beacon or not. In general, n should allow for a time series that is at least twice as long as the longest blinking period of the beacons.

In a step B which can at least partially overlap with step A, light source objects (LSOs) are recognized and tracked throughout the time series of images. As mentioned earlier, the tracking method has to be adapted to the fact that light source objects can be blinking, i.e. can temporarily "vanish" and reappear.

From the time series of images or from a time series of LSOs as recognized and tracked throughout the time series of images, blinking patterns of the LSOs are determined in step B1.

The determined blinking patterns can be compared to the stored blinking patterns of the beacons in order to determine beacon objects from among recognized and tracked LSOs in step C.

The time series of the beacon objects thus determined or of all recognized and tracked LSOs can be saved and/or updated in step C1.

Then, in step D, a state, e.g. a current position, velocity and orientation of the aircraft is determined based on the time series of the beacon objects and the known location of the corresponding beacons.

By continuously repeating this process, the state of the aircraft can be continuously updated, preferably in real time, and this information can be used to guide an autonomous aircraft to the destination or to assist a pilot in this task (cf. Step E).

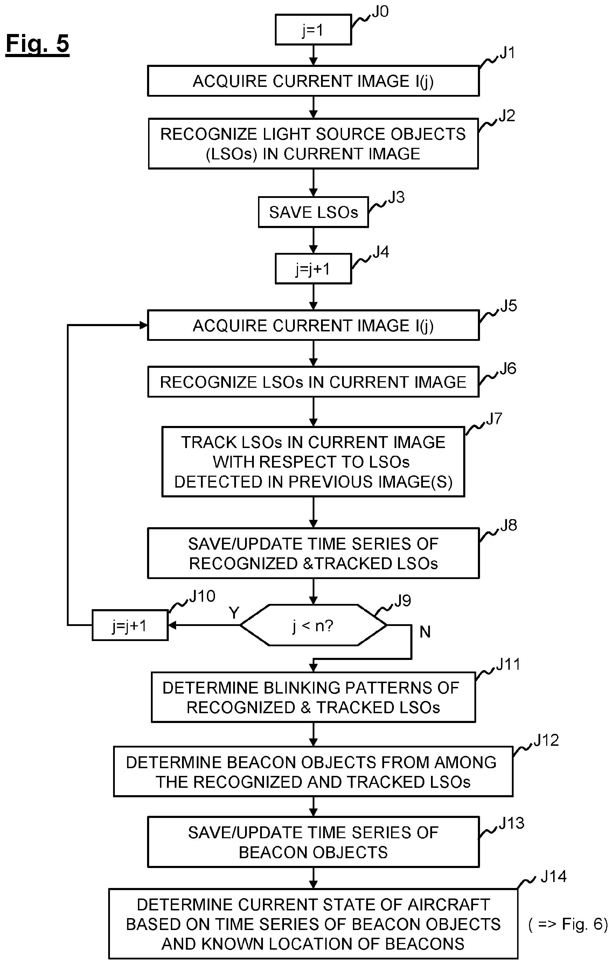

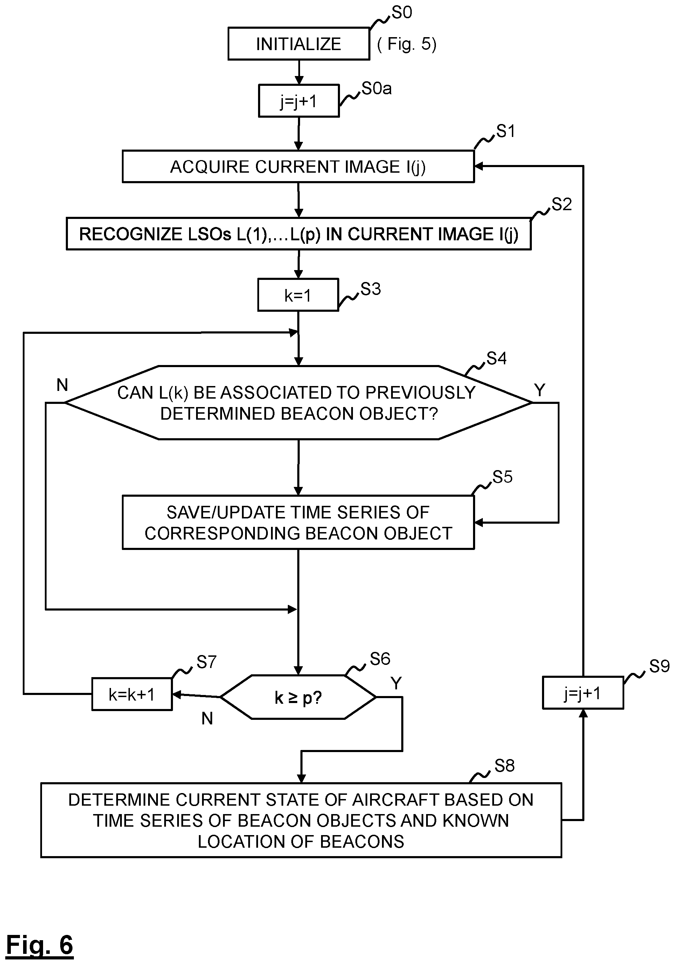

Now, a method according to an embodiment of the invention is described in more detail with respect to Figures 5 and 6, Figure 5 showing an initialization process and Figure 6 showing the remaining method steps, that are repeated throughout the process.

In a first step J0 of the initialization process of Fig. 5, an index j is set to 1. Afterwards, in step J1, a current (first) image I(j) is acquired and light source objects (i.e. bright areas and their positions, preferably also their sizes) are recognized in this first image in step J2, wherein a unique ID can be assigned to each LSO. The recognized LSOs of the first image can then be saved in step J3.

The index is incremented in step J4 and the next image I(j) is acquired in step J5. Light source objects are recognized in the current image in step J6 and are tracked, i.e. associated to light source objects recognized in the previous image(s) in step J7.

If a LSO can be associated to a LSO recognized in a previous image, the same ID is assigned to it. If it cannot be associated to any LSO previously recognized, a new unique ID is created for this newly detected LSO. The resulting time series of recognized and tracked light source objects are saved or updated in step J8. If a LSO is not visible in a particular image, it can be considered to be temporarily turned off in this image according to a blinking pattern.

If the index is smaller than the time series length n, the index is incremented in step J10 and method returns to step J5, thus repeating steps J5 to J9 until the index reaches the time series length.

Now, the light source objects have been recognized and tracked throughout the first n images. Therefore, the blinking patterns of all recognized and tracked light source objects can be determined in step J11.

By comparing the determined blinking patterns with the known blinking patterns of the beacons, it is determined in step J12 which of the LSOs correspond to beacons and are thus beacon objects, i.e. if a determined blinking pattern matches the known blinking pattern of a beacon, the corresponding LSO is determined as a beacon object. Preferably, also the identity of the respective beacon is determined.

Optionally, the validity of the determined beacon objects can be verified through a geometric comparison with the known locations of the beacons to verify all beacon detections are physically possible (not shown).

The time series of the beacon objects is saved/updated as shown in step J13.

In a step J14, the current state of the aircraft, preferably its current location, velocity and orientation, is determined based on the time series of the beacon objects and on the known locations of the beacons and the method proceeds to those steps shown in Fig. 6.

After the initialization (S0) as shown in Fig. 5, and after incrementing the running index j again in step S0a, a current image I(j) is acquired in step S1 of Fig. 6, j now being a natural number larger than n.

Light source objects, e.g. L(1), L(2), ..., L(p) are recognized in the current image, p being the number of recognized LSOs in the current image. It is noted that p can vary from image to image.

For each recognized LSO (cf. steps S4 to S7), it is determined in step S4 if it can be associated to one of the beacon objects as determined during initialization. It this is true, the time series of the corresponding beacon object is updated and saved in step S5.

Before step S5, the validity of the determined beacon objects can optionally be verified e.g. through a geometric comparison with the known locations of the beacons (not shown)..

When all recognized LSOs have been checked, the current state of the aircraft is determined based on the updated time series of the beacon objects and the known locations of the beacons in step S8 before the index j is incremented in step S9 and the process returns to step S1, thus repeating steps S1 to S9 as long as desired.

The state of the aircraft thus determined, preferably in real time, can be used, preferably in combination with other data, to safely guide the aircraft to its destination.

Several modifications of this very simple exemplary method are possible. For example, instead of determining the blinking patterns of all recognized light source images only once, i.e. for the first n images as shown in Fig. 5, this process can be repeated until all beacons associated to the current destination have been detected or it can be repeated e.g. with predetermined time intervals during approach in order to increase the reliability of the results. It is even possible to recalculate the blinking pattern of the last n images for each newly acquired image.

The present invention provides a robust and simple way of localizing a UAM aircraft using only relatively inexpensive sensors and ground infrastructure.

## Claims

1. Localization method for an autonomous or automated aircraft (100), the method comprising the following steps:
A) acquiring (J1, J5, S1) images of an observation area (110) in front of and/or below the aircraft (100), preferably in regular time intervals, by means of an on-board camera unit (12) while the aircraft (100) is approaching a given destination (150) located in the observation area (110), resulting in a time series of images (I(j-n), ..., I(j)), wherein a plurality of beacons (120) are arranged in the observation area (110) in a predetermined known spatial relationship to each other and to the destination (150), each beacon (120) intermittently emitting light in a predetermined known blinking pattern (160);
B) recognizing (J2, J6, S2) and tracking (J7,S4) light source objects (L(1),...,L(p)) throughout the time series of images (I(j-n), ..., I(j));
C) determining (J12) beacon objects from among the recognized and tracked light source objects based on the known blinking patterns of the beacons (120); and
D) determining (J14, S8) a state of the aircraft (100) based on those light source objects determined as the beacon objects, the state of the aircraft (100) comprising at least one of a position, a velocity, and an orientation of the aircraft (100) with respect to the destination (150).

2. Localization method according to claim 1 or 2, wherein the destination (150) is a landing pad (151) and the method further comprises the following step:
E) generating commands for autonomously landing the aircraft (100) or for assisting a pilot in landing the aircraft (100) on the landing pad (151) based on the determined state of the aircraft (150).

3. Localization method according to any of the preceding claims, wherein the beacons are configured to emit light in the visual or infrared range; preferably with wavelengths from about 1 µm to about 3 µm, and/or from about 3 µm to about 8 µm and/or from about 8 µm to about 15 µm.

4. Localization method according to any of the preceding claims, wherein the plurality of beacons (120) comprises several subgroups of beacons (121, 122, 123, 124a, 124b), each subgroup comprising at least one beacon, all beacons of a subgroup blinking in the same blinking pattern and beacons of different subgroups blinking in different blinking patterns.

5. Localization method according to any of the preceding claims, wherein the plurality of beacons (120) comprises at least one first side beacon (121) and at least one second side beacon (122) arranged on opposed sides of the destination (150) and emitting light in blinking patterns (161, 162) that are different from each other.

6. Localization method according to any of the preceding claims, wherein the plurality of beacons (120) comprises a subgroup of outline beacons (123) arranged around an outline of the destination (150), for example at four corners of a rectangular landing pad (151).

7. Localization method according to any of the preceding claims, wherein the plurality of beacons (120) comprise a subgroup of approach path beacons (124) that are arranged in a row marking an approach path (170) to the destination (150).

8. Localization method according to claim 7, wherein the approach path beacons (124) have associated blinking patterns (164a, 164b) that are dependent on a distance of the respective approach path beacon (124) to the destination (150).

9. Localization method according to any of the preceding claims wherein in step A, the images (I(j)) are acquired at a frequency of 30-60 Hz.

10. Localization device (10) for an autonomous or automated aircraft (100), comprising:
a camera unit (12) configured to acquire images of an observation area (110) in front of and/or below the aircraft (100), preferably in regular time intervals,
a storage unit (14) configured to store locations and blinking patterns of a plurality of beacons (120) arranged in a predetermined spatial relationship to each other and to a given destination (150) for the aircraft (100);
a processing unit (16) comprising:
a light detection and tracking unit (18) configured to recognize and track light source objects throughout the time series of images,
a pattern matching unit (20) configured to determine whether each recognized light source object corresponds to one of the beacons (120) based on the stored blinking patterns (160) of the beacons (120), and
a localization unit (22) configured to determine a state of the aircraft (100) with respect to the destination (150) based on those recognized light source objects that are determined to correspond to the beacons, the state of the aircraft (100) comprising at least one of a position, a velocity, and an orientation of the aircraft (100) with respect to the destination (150).

11. Localization device (10) according to claim 10, further comprising a flight control unit (26) configured to control a flight trajectory of the aircraft (100) based on the determined state thereof.

12. Localization device (10) according to claim 10 or 11, further comprising a communication unit (24) configured to receive the locations and blinking patterns (160) of the beacons (120) from an external communication unit (180) associated to the destination (150).

13. Automated or autonomous aircraft (100), in particular urban air mobility aircraft, comprising a localization device (10) according to any of claims 10 to 12.

14. Automated or autonomous aircraft (100) according to claim 13, wherein the aircraft (100) is a VTOL aircraft.
